# EUROPEAN PATENT SPECIFICATION

(11) **EP 3 991 973 B1**
(45) Date of publication and mention of the grant of the patent: **21.08.2024**
(21) Application number: 20832053.1
(22) Date of filing: 12.06.2020
(51) Int. Cl.: B41J 2/175, H04N 1/00, B41J 29/13, G03G 15/00, G06F 3/12

(54) **IMAGE RECORDING DEVICE**
BILDAUFZEICHNUNGSVORRICHTUNG
DISPOSITIF D'IMPRESSION D'IMAGE

(30) Priority: 28.06.2019 JP 2019120836
(43) Date of publication of application: 04.05.2022
(73) Proprietor: Brother Kogyo Kabushiki Kaisha, Aichi 467-8561 (JP)
(72) Inventor: ESAKI Shinya, Nagoya-shi, Aichi 467-8561 (JP); DEURA Yushi, Nagoya-shi, Aichi 467-8561 (JP); AZECHI Haruka, Nagoya-shi, Aichi 467-8561 (JP); OKUNO Tetsuya, Nagoya-shi, Aichi 467-8561 (JP); MINAMIKAWA Shunsuke, Nagoya-shi, Aichi 467-8561 (JP)
(74) Representative: J A Kemp LLP
(86) International application number: PCT/JP2020/023175
(87) International publication number: WO 2020/262037

(56) References cited:
- JP-A- 2004 046 615
- JP-A- 2008 227 914
- JP-A- 2011 152 794
- JP-A- 2015 208 990
- JP-A- 2018 114 626
- No further relevant documents disclosed

## Description

### TECHNICAL FIELD

The present invention relates to a technology for image recording device configured to output status information.

### BACKGROUND ART

There have been known image recording devices that are used with mounted cartridges that store consumables such as ink or toner. There has been known that some image recording devices of this type are configured to transmit status information, such as a remaining amount of consumable materials such as ink or toner stored in the mounted cartridge, in response to a request from a terminal device such as a personal computer (see, for example, Patent Document 1).

As usage modes of the image recording device, there have been known a contracted usage mode, in which a user of the image recording device concludes a contract with a service provider and uses the image recording device, and a normal usage mode, in which a user uses the image recording device without concluding a contract with a service provider. The service provider provides consumables such as cartridges used in the image recording device to the user based on the contract with the user. JP-A-2008 227 914 discloses an image forming apparatus in which only a user who requires the notification of maintenance information can be notified of the maintenance information.

### PRIOR ART DOCUMENT

### PATENT DOCUMENT

Patent Document 1: Japanese Unexamined Patent Publication No. 2002-211087

### SUMMARY OF THE INVENTION

### PROBLEMS TO BE SOLVED BY THE INVENTION

For example, a status information type the service provider wants to obtain from the image recording device when the image recording device is used in a contracted usage mode may be different from a status information type the user wants to obtain from the image recording device when the image recording device is used in the normal use mode. Alternatively, even when the image recording device is used in a normal usage mode, the status information type an administrator of the image recording device wants to obtain and the status information type the user wants to obtain from the image recording device may be different.

It is an object of the present invention to provide a technology that enables an image recording device to output status information of a type that corresponds to the usage mode and to a type of a user who requests the status information.

### MEANS FOR SOLVING THE PROBLEM

This specification discloses various disclosures. According to the present invention, there is provided an image recording device as defined in appended claim 1.

The controller identifies, based on the correspondent information, the status information associate with a type indicated by the determined request type information and the output determination information corresponding to the usage type information from among the plurality of status information types. The controller outputs the identified status information. Therefore, the example of the image recording device can output the status information corresponding to a usage mode indicated by the usage type information and a type of a person who request the status information.

### BRIEF DESCRIPTION OF THE DRAWINGS

Fig. 1 is a functional block diagram of a printer 10.
Fig. 2(A) shows is a perspective view of the printer 10 in a state where a cover 22 is opened, and Fig. 2(B) is a schematic front view of a maintenance device 60.
Fig. 3 is a schematic cross-sectional view of the printer 10.
Fig. 4 shows a correspondence table.
Fig. 5 shows a check table.
Fig. 6 shows a process by which the printer 10 receives instructions from a service provider and an administrator to designate a status information type to be output.
Fig. 7 is a flowchart illustrating a status information output process.
Fig. 8 is a flowchart illustrating an output status information identification process.

### EMBODIMENTS FOR CARRYING OUT THE INVENTION

Hereinafter, an embodiment according to the present invention will be described. It should be noted that the embodiment described below is only one example of the invention, and that the embodiment of the invention can be modified as necessary to the extent that the intent of the invention is not changed. For example, an order of execution of each of the processes described later may be changed as appropriate to the extent that the intent of the invention is not changed. Alternatively, some of the processes described later may be omitted as appropriate to the extent that the omission does not change the intent of the present invention.

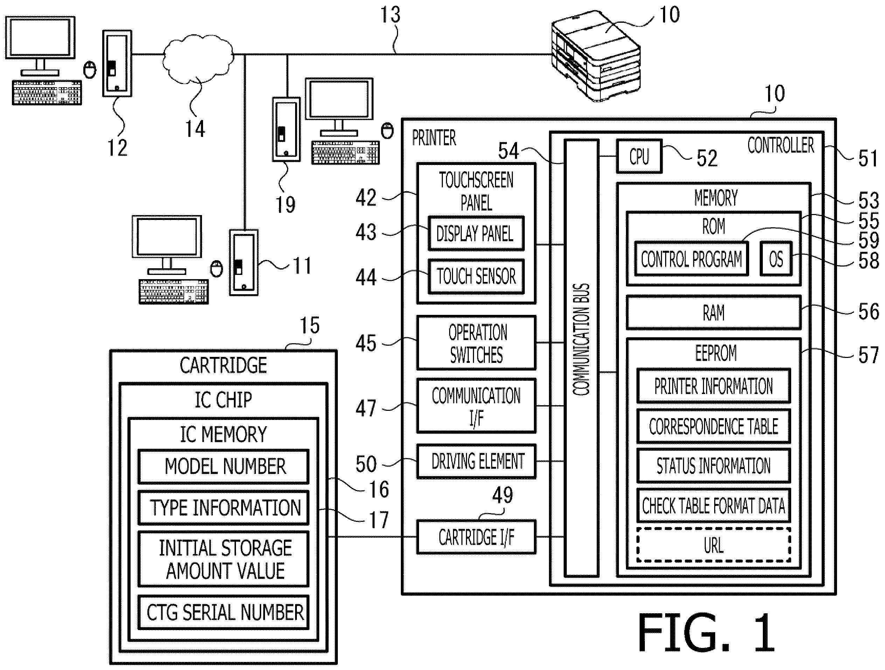

In the present embodiment, as shown in Fig. 1, a printer 10 that is connected to a local network 13 such as a LAN (Local Area Network) or WAN and is used will be described. The printer 10, for example, receives recording instructions from a terminal device 19 or a management device 11 connected to the local network 13, and records image data contained in the recording instructions onto a sheet. The terminal device 19 or the management device 11 is a personal computer, a tablet, or a portable terminal. When the terminal device 19 or the management device 11 is a tablet or a portable terminal, the terminal device 19 or the management device 11 transmits the recording instructions to the printer 10 through an access point provided in the local network 13. It is noted that the terminal device 19 is a device used by the user of the printer 10, and the management device 11 is a device used by the administrator of the printer 10.

A user of the printer 10 uses the printer 10 by concluding a contract with a service provider, or without concluding a contract with the service provider. The service provider is an entity who provides the user with a service such as providing the user with cartridges 15 to be used in the printer 10. The service provider provides the service to the user of the printer 10 using a server 12 connected to the Internet 14. For example, the server 12 receives, via the Internet 14, status information transmitted from the printer 10, which indicates remaining amount of ink stored in the cartridges 15 (hereinafter also referred to as the ink remaining amount). The service provider monitors the ink remaining amount based on the status information received by the server 12. When the service provider determines, for example, that the ink remaining amount is low, the service provider arranges for the shipment of a new cartridge 15. The server 12 is an example of an information processing device.

The printer 10 has a function of transmitting status information in response to a request from the management device 11 or from the server 12. The printer 10 also has a function of changing the status information type to be transmitted according to the type of user requesting the status information. The type of user requesting the status information includes an administrator who manages the printer 10, a user who uses the printer 10, or a service provider as described above. The status information types will be described later. Hereinafter, the function of the printer 10 to change the status information type to be transmitted according to the type of the user requesting the status information will be described in detail.

The local network 13 to which the printer 10 is connected is connected to the Internet 14 via an unshown gateway device such as a router. The printer 10 communicates with the server 12 through the local network 13 and the Internet 14 using communication protocols such as HTTP or HTTPs. Concretely, the printer 10 transmits an HTTP request to a URL (Uniform Resource Locator) published by the server 12. The server 12 receives the HTTP request transmitted from the printer 10, and transmits a response to the received HTTP request to the printer 10 through the Internet 14.

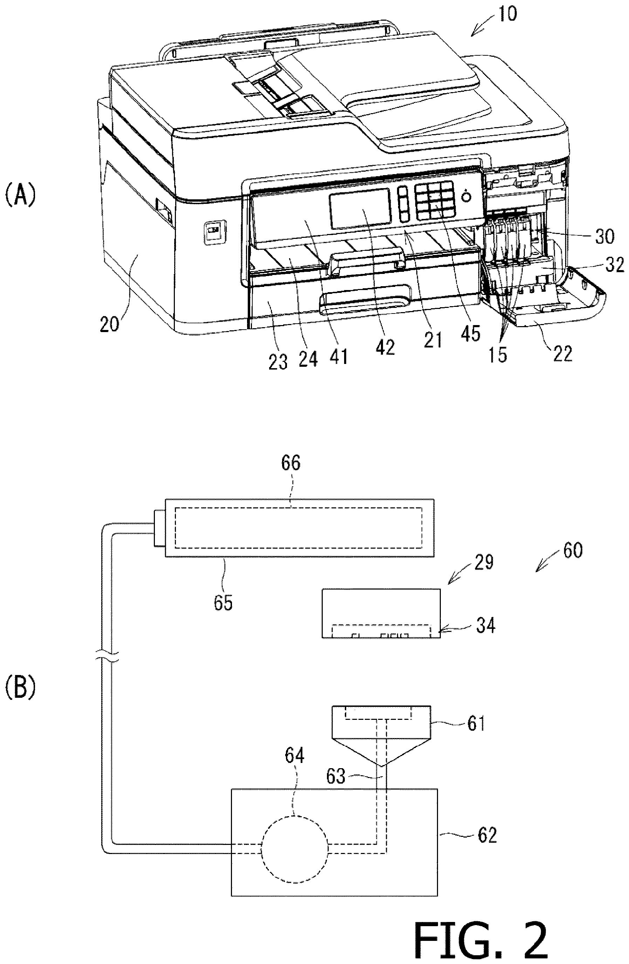

As shown in Fig. 2(A), the printer 10 has a housing 20. The printer 10 has a panel unit 21, a cover 22, a sheet feed tray 23, and a sheet discharge tray 24, each held in the housing 20.

The panel unit 21 has a panel body 41, a touchscreen panel 42 and a plurality of operation switches 45 held on the panel body 41. The panel body 41 is in a form of a rectangular plate and is attached to one surface of the housing 20. The touchscreen panel 42 has a display panel 43 to display images, and a transparent film-like touch sensor 44 overlaid on the display panel 43, as shown in Fig. 1. The touch sensor 44 is configured to output position information indicating a position where the user touches on the display panel 43.

The display panel 43, the touch sensor 44, and the operation switches 45 of the touchscreen panel 42 are connected to a controller 51, which is described later, by cables or the like. The controller 51 is configured to output image data to the display panel 43, thereby displaying an image on the display panel 43. In addition, the controller 51 is configured to receive the position information output from the touch sensor 44. The controller 51 is configured to determine that the object, such as an icon, that is displayed at the position indicated by the position information input from the touch sensor 44 is the object selected by the user. In addition, the controller 51 is configured to receive an operation signal output by the operation switches 45. The touch sensor 44 and the operation switches 45 are examples of a user interface and an information interface.

The sheet feed tray 23 is arranged at a lower part of the housing 20, as shown in Fig. 2(A), and is removably held by the housing 20. The sheet discharge tray 24 is arranged at a lower part of the housing 20 and above the sheet feed tray 23, and is held by the sheet feed tray 23 or the housing 20. The cover 22 is arranged at a front part of the housing 20 and is rotatably held by the housing 20. The cover 22 is configured to rotate between a closed position (not shown), at which the cover 22 closes an opening 30 formed on a front surface of the housing 20, and an open position (Fig. 2(A)), at which the cover 22 uncovers the opening 30. A mounting case 32 is arranged at a portion behind the opening 30 and is held in the housing 20. The mounting case 32 has a configuration for removably holding the cartridge 15. Since such a configuration is well known, a detailed description thereof will be omitted. The mounting case 32 is an example of a mounting part.

The mounting case 32 is configured to removably hold a plurality of cartridges 15. In the example shown in the drawings, the mounting case 32 removably holds four cartridges 15. Each of the cartridges 15 stores, for example, ink of one of the colors magenta, cyan, yellow, and black. Thus, the printer 10 is a so-called inkjet printer and a color printer. It is noted, however, the mounting case 32 may be configured to removably hold only one cartridge 15 storing black ink. That is, the printer 10 may be a so-called monochrome printer. The mounting case 32 may be configured to removably hold one or more cartridges 15 storing toner instead of ink. That is, the printer 10 may be a so-called laser printer.

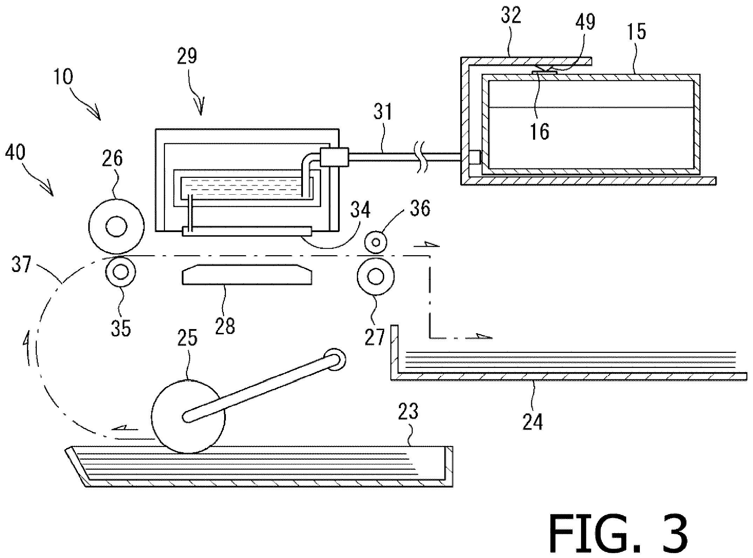

The mounting case 32 has a cartridge I/F 49 shown in Fig. 3. It is noted that "I/F" is an abbreviation for the term "interface." The cartridge I/F 49 is, for example, a terminal. The cartridge I/F 49 is arranged at a position where the cartridge I/F 49 is in contact with an electrode (not shown) of an IC chip 16 of the cartridge 15 mounted in the mounting case 32. The cartridge I/F 49 is connected to the controller 51 (which will be described later) by a not shown cable. It is noted that the cartridge I/F 49 may be an antenna, or a light emitting diode and a photodiode. In other words, the cartridge I/F 49 and the IC chip 16 may be configured to exchange information and data by radio waves or light.

The cartridge 15 is box-shaped with an internal space for storing ink. Since a basic structure of the cartridge 15 is well known, a detailed explanation thereof is omitted. The ink is an example of a consumable material. Further, the cartridge 15 includes the IC chip 16. The IC chip 16 has an electrode (not shown) in contact with the cartridge I/F 49 which is a terminal, and an IC memory 17 (Fig. 1) electrically connected to the electrode. Alternatively, the IC chip 16 may have, instead of the electrode, an antenna or a light emitting diode and a photodiode. The IC memory 17 is configured to store various types of information. Concretely, the IC memory 17 stores at least a model number, type information, an initial storage amount value, and a CTG serial number, as shown in Fig. 1. The "CTG" is an abbreviation for a term "Cartridge." The IC memory 17 is an example of a cartridge memory. The CTG serial number is an example of cartridge identification information.

The model number is the identification information assigned to the cartridge 15 according to the color of the ink stored in the cartridge 15 and/or the type of the ink, such as dye or pigment. The type information indicates whether the cartridge 15 is for use in a contracted usage mode or in a normal usage mode. For example, the type information is a onebit data that indicates "0" or " 1" stored in a particular address in the IC memory 17. For example, the type information "1" indicates that the cartridge is for use in the contracted usage mode, and the type information "0" indicates that the cartridge is for use in the normal usage mode. It is noted, however, the type information may be a part of the model number. That is, a model number may indicate the color and type of the ink and whether cartridge is for use in the normal usage mode or contracted usage mode.

The initial storage amount value indicates the initial amount of the ink stored in the cartridge 15. The initial storage amount value is used when the controller 51 calculates the ink remaining amount in the cartridge 15. The CTG serial number is a number that individually identifies the cartridge 15.

As shown in Fig. 3, the housing 20 holds a recording engine 40 therein. The recording engine 40 includes a sheet feed roller 25, a conveying roller 26, a sheet discharging roller 27, a platen 28, a recording unit 29, and a maintenance device 60 (Fig. 2(B)). The recording unit 29 is an example of a recording section. The sheet feed roller 25 is held by a frame (not shown) provided in the housing 20 so as to contact a sheet on the sheet feed tray 23. The sheet feed roller 25 is rotated by a motor (not shown). The rotating sheet feed roller 25 feeds a sheet into a conveyance path 37. The conveyance path 37 is a space defined by a guide member (not shown). In the example shown in the drawing, the conveyance path 37 extends in a curved manner from the rear end of the sheet feed tray 23 to a position above the sheet feed tray 23, and then extends forward.

The conveying roller 26 is arranged downstream of the sheet feed tray 23 in a sheet conveying direction. The conveying roller 26, together with a driven roller 35, constitutes a roller pair. The conveying roller 26 is rotated by a motor (not shown). The rotating conveying roller 26 and the driven roller 35 hold and convey the sheet fed into the conveyance path 37 by the sheet feed roller 25. The sheet discharging roller 27 is arranged downstream of the conveying roller 26 in the sheet conveying direction. The sheet discharging roller 27, together with a driven roller 36, constitutes a roller pair. The sheet discharging roller 27 is rotated by a motor (not shown). The rotating sheet discharging roller 27 and the driven roller 36 hold and convey the sheet and discharging the same into the sheet discharge tray 24. The platen 28 is arranged downstream of the conveying roller 26 and upstream of the sheet discharging roller 27 in the sheet conveying direction.

The recording unit 29 is arranged above the platen 28. The recording unit 29 may be movably held by guide rails that are part of the frame, or may be fixed to the frame. In other words, the printer may be a so-called serial printer or a so-called line printer. Further, the recording unit 29 has a head 34. The head 34 has a flow channel inside which ink flows. The flow channel communicates with an internal space of the cartridge 15 mounted in the mounting case 32 by a tube 31. In other words, the ink stored in the cartridge 15 is supplied to the head 34 through the tube 31.

The head 34 has a driving element 50, which is shown in Fig. 1. A portion of the driving element 50 constitutes a flow channel inside the head 34. The driving element 50 is electrically connected to the controller 51 by an unshown cable or the like. The driving element 50 is a piezoelectric element or a heater. When the driving element 50 is the piezoelectric element, the driving element 50 deforms as a DC voltage is supplied, and applies pressure to the ink in the flow channel, thereby an ink droplet being ejected from a nozzle, which are openings of the channel. When the driving element 50 is the heater, the driving element 50 generates heat as the DC voltage is supplied, and causes the ink in the flow channel to boil, thereby an ink droplet being ejected from a nozzle.

A maintenance device 60 shown in Fig. 2(B) has the function of suctioning the ink from the nozzles of the head 34. The maintenance device 60 cleans the head 34 by, for example, suctioning ink that has become highly viscous, ink mixed with air, and dust adhering to the head 34.

The maintenance device 60 includes a cap 61, a lift-up mechanism 62, a tube 63, a pump 64, a drainage tank 65, and a pad 66. The cap 61 is movably held at the lift-up mechanism 62 such that the cap 61is movable between a cap position, at which the cap 61 contacts a lower surface of the head 34 and covers the nozzles, and a standby position, at which the cap 61 is separated from the lower surface of the head 34. The cap 61 is moved between the cap position and the standby position by an unshown motor. When the cap 61 is located at the cap position and the pump 64 is driven, ink is suctioned from the nozzles of the head 34 by the driven pump 64. The ink suctioned by the pump 64 is discharged through the tube 63 into the drainage tank 65. A pad 66 that absorbs the ink is accommodated in the drainage tank 65. In the example shown in the drawing, an example of the maintenance device 60 collectively suctioning black ink, cyan ink, magenta ink, and yellow ink together is shown. The maintenance device 60 may be configured to separately suction black ink and colored ink such as cyan ink, magenta ink, and yellow ink.

As shown in Fig. 1, the printer 10 includes a controller 51. The controller 51 includes a CPU 52, a memory 53, and a communication bus 54. The CPU 52, the memory 53, the touchscreen panel 42, the operation switches 45, a communication I/F 47, the driving element 50, and the cartridge I/F 49 are connected to the communication bus 54. In other words, the CPU 52 is connected to the memory 53, the touchscreen panel 42, the operation switches 45, the communication I/F 47, the driving element 50, and the cartridge I/F 49 through the communication bus 54 so that information and data can be exchanged. The communication I/F 47 is an example of an information interface.

The memory 53 has a ROM 55, a RAM 56, and an EEPROM 57. The ROM 55 stores, in advance, an OS (operating system) 58, and a control program 59. Instructions described in the OS 58 and the control program 59 are executed by the CPU 52. In other words, the OS 58 and the control program 59 are executed by the CPU 52. The OS 58 and the control program 59 executed by the CPU 52 display images on the display panel 43 and receive user inputs through the touch sensor 44 and/or the operation switches 45. Further, the OS 58 and the control program 59 executed by the CPU 52 transmit and receive information and/or data through the communication I/F 47 and the cartridge I/F 49. Furthermore, the OS 58 and the control program 59 executed by the CPU 52 output drive signals to the driving element 50 to record images on the sheet.

The control program 59 may be a single program or a program including multiple modules. For example, the control program 59 has a UI (User Interface) module, a communication module, and a recording control module. The multiple modules are executed in a pseudo-parallel manner by so-called multitasking.

The UI module is a program that supplies image data to the display panel 43 to display images containing objects such as icons on the display panel 43, and receives signals output from the touch sensor 44 and/or the operation switches 45. The communication module is a program that transmits and receives information and data according to a communication protocol of a communication line to which the communication I/F 47 is connected. The recording control module is a program that generates and outputs drive signals to be input to the drive circuits of the above-mentioned motors and driving element 50 based on the print data.

The RAM 56 is used for executing the OS 58 and the control program 59, and also configured to temporarily store information and/or data in executing the OS 58 and the control program 59. The EEPROM 57 is configured to store printer information including a main body serial number and a model name, a correspondence table, a plurality of status information types, and check table format data. Further, when the printer 10 is used in the contracted usage mode, the EEPROM 57 stores a URL published by the server 12. The correspondence table is an example of correspondence information. The main body serial number is an example of main body identification information.

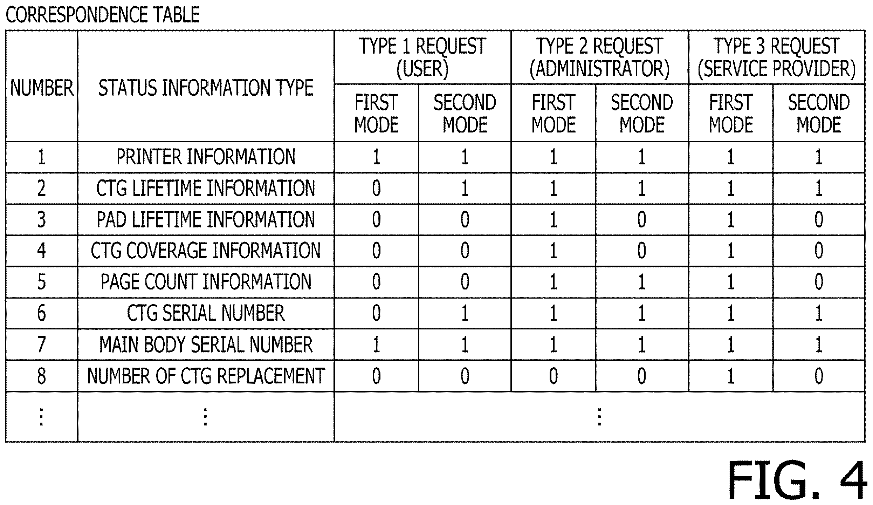

The correspondence table has items of "number," "status information type," "type 1 request (user,)" "type 2 request (administrator)," and "type 3 request (service provider)" as shown in Fig. 4. Further, each of the items of "type 1 request (user)," "type 2 request (administrator)," and "type 3 request (service provider)" has sub-items of "first mode" and second mode." The "first mode" indicates that the printer 10 is used in the contracted usage mode. The "second mode" indicates that the printer 10 is used in the normal usage mode. The "type 1 request (user)," "type 2 request (administrator)" and "type 3 request (service provider)" are examples of the request type information. The "first mode" and "second mode" are examples of output determination information. That is, in the correspondence table, multiple status information types are associated with request type information and output determination information.

The status information type is stored in the memory 53 in the field of the item "status information type." In the following description, storing of information in memory 53 in correspondence with the field of the correspondence table will be expressed as "registration in the field" or "registration in the correspondence table." In the example shown in the drawing, multiple status information types such as "printer information," "CTG lifetime information," "pad lifetime information," "CTG coverage information," "page count information," "CTG serial number," "main body serial number," and "number of CTG replacement" are registered in the fields corresponding to the item "status information type."

The "printer information," "CTG lifetime information" and the like registered in the fields of the correspondence table indicate the status information of the "printer information," "CTG lifetime information" and the like stored in the EEPROM 57 of the memory 53. A detailed description thereof will be made below.

The "printer information" is, for example, an MIB (Management Information Base) stored in the memory 53, and indicates information including the model name and the main body serial number. In other words, the "printer information" is the information stored in the memory 53 in advance. It is noted that the "printer information" may include information, which is stored in the EEPROM 57 of the memory 53 after the printer 10 has been installed, such as a private IP address that the gateway device in the local network 13 has assigned to the printer 10.

The "CTG lifetime information" indicates the information indicating the lifetime of the cartridge 15, which is determined by the controller 51 and stored in the EEPROM 57 of the memory 53. The controller 51, for example, counts the number of times the driving element 50 is driven as a dot count value. The controller 51 calculates the remaining amount of the ink stored in the cartridge 15 mounter in the mounting case 32 by subtracting the dot count value from the initial storage value read from the IC memory 17 through the cartridge I/F 49. The memory 53 stores in advance, for example, a table in which the remaining ink value and the lifetime are associated with each other. The controller 51 identifies the lifetime corresponding to the calculated ink remaining value in the table and stores the identified lifetime in the memory 53 as the CTG lifetime. The calculation of the remaining amount of ink stored in the 15 cartridges and the determination of the CTG lifetime is one example, and the remaining amount of the ink and/or the CTG lifetime may be determined in other methods. The CTG lifetime information is an example of cartridge lifetime information.

The "pad lifetime information" indicates the information indicating the lifetime of the pad 66 (Fig. 2(B)). The "pad lifetime information" is determined by the controller 51 and stored in the EEPROM 57 of the memory 53. The controller 51 calculates, for example, the amount of ink that the pump 64 has suctioned from the nozzles of the head 34 (hereinafter also referred to as the amount of drainage) based on the number of times the pump 64 of the maintenance device 60 has been driven or a period of time during which the pump 64 has been driven. The memory 53 stores in advance, for example, a table in which the amount of drainage and the lifetime are associated with each other. The controller 51 identifies the lifetime corresponding to the calculated amount of drainage and stores the identified lifetime in the EEPROM 57 of the memory 53 as pad lifetime information. The determination of the pad lifetime is one example, and the pad lifetime may be determined in other methods.

The "CTG coverage information" is information indicating an occupancy rate of the ink stored in each cartridge 15 mounted in the mounting case 32. The "CTG coverage information" is calculated by the controller 51 and stored in the EEPROM 57 of the memory 53. For example, the "CTG coverage information" is information indicating percentage when the black ink ejected on the entire surface of one particular sheet of paper (A4 or Letter size) is 100%. Therefore, when black ink is ejected in the area of half of a sheet of the above particular sheet, the black ink coverage information is 50%. The controller 51 calculates the coverage information for each sheet on which the recording engine 40 has recorded, and based on the calculated coverage information, calculates average CTG coverage information for a plurality of sheets on which the recording engine 40 has recorded. For example, when black ink is ejected in the area of half of the first sheet of a particular paper, the coverage information of black ink is 50%, and when black ink is ejected in the area of one-quarter of the second sheet of a particular paper, the coverage information of black ink is 25%. Therefore, the CTG coverage information of black ink when printed for the above two particular sheets is (50 + 25)/2 = 37.5%.

The "page count information" is information indicating the number of sheets recorded by the recording engine 40. The "page count information" is counted by the controller 51 and stored in the EEPROM 57 of the memory 53. The controller 51 counts the number of sheets on which the recording engine 40 has recorded images in the same manner as described above, and stores the counted number of sheets as the page count information in the EEPROM 57 of the memory 53.

The "CTG serial number" indicates the CTG serial number of the cartridge 15 mounted in the mounting case 32. The controller 51 reads the CTG serial number from the IC memory 17 through the cartridge I/F 49 and stores the read CTG serial number in the memory 53. The "main body serial number" indicates the main body serial number of the printer 10 stored in the memory 53 in advance.

The "number of CTG replacement" indicates the number of times the cartridge 15 has been replaced in the printer 10, which is counted by the controller 51 and stored in the EEPROM 57 of the memory 53. The "number of CTG replacement" is an example of replacement count information. The controller 51 reads, for example, the CTG serial number from the IC memory 17 through the cartridge I/F 49 and determines whether or not the read CTG serial number matches the CTG serial number stored in the EEPROM 57 of the memory 53. When the read CTG serial number does not match the CTG serial number stored in the memory 53, the controller 51 determines that the cartridge 15 has been replaced and increments the number of CTG replacement stored in the EEPROM 57 of the memory 53. It is noted that the status information of types other than the status information of the above-described types may be registered in the correspondence table. For example, the status information of the types such as "sheet jam," which indicates that a sheet jam has occurred in the recording engine 40, "near empty," which indicates that the amount of ink stored in the cartridge 15 is low, and "ink empty," which indicates that there is not enough ink stored in the cartridge 15 to record an image on the sheet may be stored in the correspondence table. It is also noted that all of the status information types described above may not necessarily be registered in the correspondence table.

It is noted that the status information types of the "CTG lifetime information," the "CTG coverage information," the "CTG serial number," and the "number of CTG replacement " are examples of "information on the cartridge." Further, the status information types of the "page count Information" is an example of "information corresponding to operation of the head." The status information type of the "pad lifetime information" is an example of state information.

The correspondence table has a plurality of records each of which contains one of the status information types described above. Each record is identified by a number such as "1" or "2" registered in the field corresponding to the item "Number." In each record, "1" or "0" is registered in fields corresponding to two sub-items of the item "type 1 request (user)," fields corresponding to two sub-items of the item "type 2 request (administrator)," and fields corresponding to two sub-items of the item "type 3 request (service provider)," respectively. The value "1" represents that the status information indicated by the corresponding status information type is to be output. The value "0" represents that the status information indicated by the corresponding status information type is not to be output.

To describe in detail, in a record identified by the number "2" and containing the status information type of "CTG lifetime information," the value "0" is registered in the field corresponding to the sub-item "first mode" of the item "type 1 request (user)." In addition, the value "1" is registered in the field corresponding to the sub-item "second mode" of the item "type 1 request (user)." That is, whether or not the status information type "CTG lifetime information" is output varies depending on whether in the "first mode" or the "second mode." In a record identified by the number "2" and containing the status information type of "CTG lifetime information," the value "1" is registered in the field corresponding to the sub-item "first mode" of the item "type 2 request (administrator)." In addition, the value "0" is registered in the field corresponding to the sub-item "first mode" of the item "type 1 request (user)." That is, whether or not the status information type "CTG lifetime information" is output varies depending on whether the status information represented by the status information type "CTG lifetime information" is the "type 1 request (user)" or the "type 2 request (administrator)." Similarly, depending on whether the mode is the "first mode" or the "second mode," and whether the status information indicates the "type 1 request (user)" or the "type 2 request (administrator)," it is determined whether each of the status information types of "pad lifetime information," the "CTG coverage information," the "page count information," and the "CTG serial number" is to be output or not.

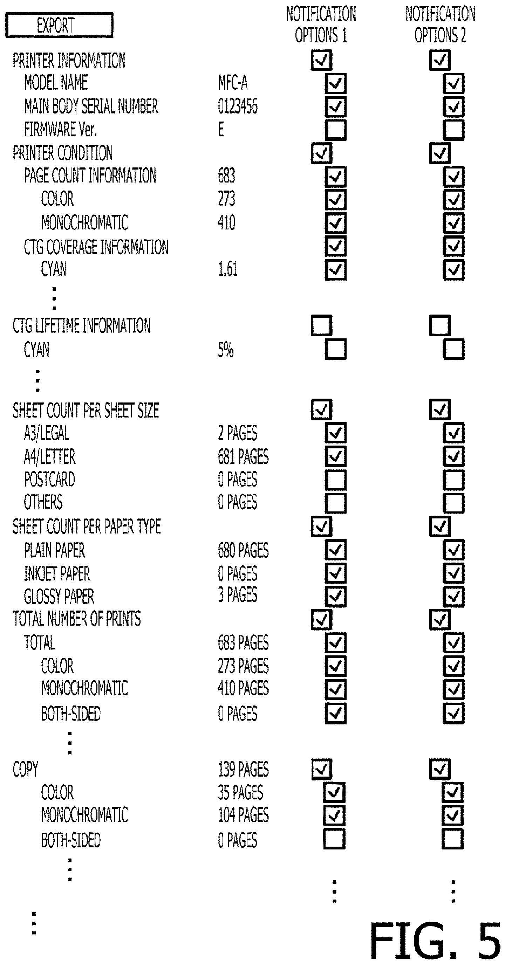

The check table format data is data used to generate check table image data indicating a check table shown in Fig. 5. The check table image data is data that is transmitted to the management device 11 or the server 12 through the local network 13 or the Internet 14, and is HTML (Hyper Text Markup Language) data or the like.

The check table format data includes letters "export" and multiple items such as items of "printer information," "printer condition," and "CTG lifetime information" to be displayed below the letters "export." The check table format data includes sub-items such as "model name" and "main body serial number" that are to be displayed below the item "printer information." Further, the check table format data also includes letters of "notification options 1" and "notification options 2" which are displayed on the right side with respect to the letters "export." The letters "notification options 1" indicates the administrator of the printer 10. The letters "notification options 2" indicates the service provider. The check table format data has a plurality of check boxes that are displayed at positions below the "notification options 1" and on the right of the item "printer information" and other items, and the sub-item "model name" and other sub-items. Further, the check table format data has a plurality of check boxes that are displayed below the "notification options 2" and on the right of the item "printer information" and other items, and the sub-item "model name" and other sub-items. The check boxes are used to receive instructions from the administrator or the service provider as to whether or not to output the items and sub-items to be displayed on the left side. In the example shown in the drawing, the check box displayed on the right side of the sub-item "model name" and below the "notification options 1" is checked. The checked check box represents that the status information of "model name" is to be transmitted to the management device 11. In other words, the check table format data is data used to receive selection of the status information type to be transmitted to the management device 11 and/or server 12.

The check table format data further has fields, which is to be displayed between the above-described items and the check boxes, and between the above-described sub-items and the check boxes, where information can be entered. The field is given the same field name as the name of the item or the sub-item displayed on the left side. The controller 51 reads the status information stored in the EEPROM 57 of the memory 53, which is given the same name as the field name, from the memory 53 and inputs the same into the field to generate the check table image data described above from the check table format data. The check table image data also includes a script for receiving checks of the check boxes.

Hereinafter, the process executed by the control program 59 will be described. In the following description, processes executed by the control program 59 will be described as processes executed by the controller 51 (especially, the CPU 52).

First, processes that the controller 51 determines the mode will be described. The controller 51 determines mode to be the first mode when the printer 10 is used in the contracted usage mode, and determines the mode to be the second mode when the printer 10 is used in the normal usage mode. Concretely, the controller 51 reads the type information from the IC memory 17 through the cartridge I/F 49 in response to the cartridge 15 being attached to the mounting case 32 or in response to the printer 10 being turned on. When the controller 51 determines that the read type information is "1," the controller 51 determines the mode is to be the first mode, while when the type information read is "0," the controller 51 determines the mode to be the second mode. The controller 51 determines the mode by storing mode information indicating the determined mode in a particular area in the EEPROM 57 of the memory 53 that is defined as an area where the mode information indicating the mode is to be stored. The type information read from the IC memory 17 of the cartridge 15 is an example of usage type information. The mode information is an example of output determination information. It is noted that the above-described process in which the controller 51 determines the mode is only one example of determining the mode, and the controller 51 may determine the mode in accordance with other methods.

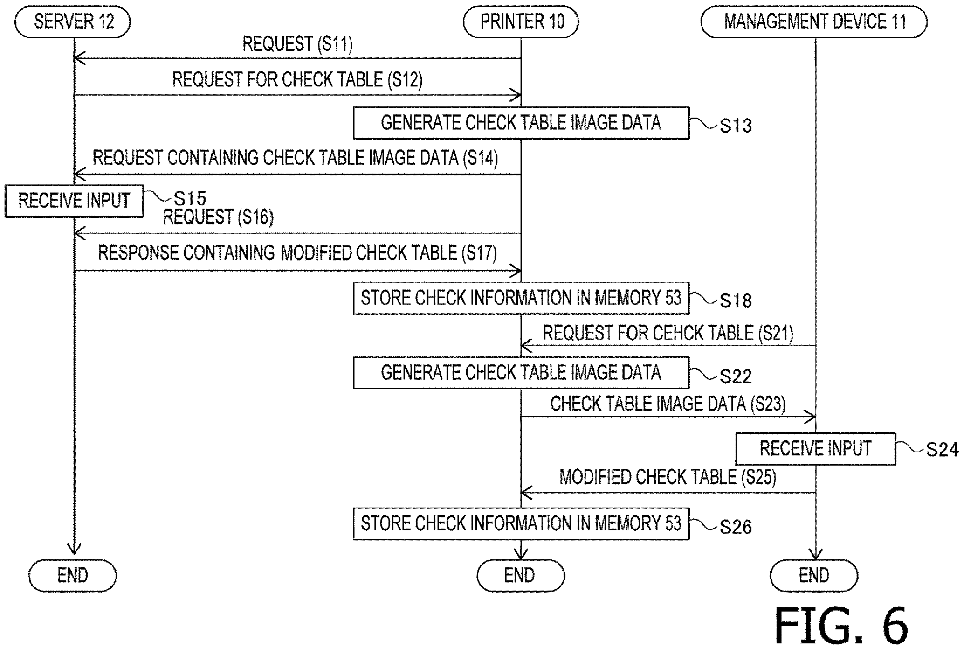

Next, processes that the controller 51 generates the above-described check table image data and receives instructions from the administrator or service provider with use of the generated check table image data will be described with reference to Fig. 6. In response to the determined mode being the first mode, the controller 51 periodically transmits an HTTP request (hereinafter simply referred to as a "request") in accordance with the HTTP communication protocol to a URL stored in the EEPROM 57 of the memory 53, through the communication I/F 47, the local network 13, and the Internet 14 (hereinafter simply referred to as "through the communication I/F 47") (S11). In other words, the controller 51 executes so-called polling in order to receive instructions from the server 12.

The program implemented in the server 12 receives the HTTP request and transmits an HTTP response (hereinafter simply referred to as a "response") containing a command requesting a check table to the printer 10 through the Internet 14 and the local network 13 (S12). The controller 51 receives the response transmitted by the server 12 through the communication I/F 47 (S12). The controller 51 generates the above-described check table image data according to the commands contained in the received response (S13). The controller 51 transmits a request containing the generated check table image data to the server 12 through the communication I/F 47 (S14). The program implemented in the server 12 receives the request transmitted by the printer 10 (S14), displays on the display of the server 12 the check table (Fig. 5) indicated by the check table image data included in the received request, and receives the input of instructions from the service provider (S15). The program of the server 12 changes presence or absence of the check in the check table according to the received instructions from the service provider, and waits until receiving a request transmitted from the printer 10. Then, in response to receiving the request transmitted from the printer 10 (S16), the program of the server 12 generates a response including the check table in which the presence or absence of each check has been modified (hereinafter referred to as a "modified check table"). The program of the server 12 transmits the generated response to the printer 10 through the Internet 14 and the local network 13 (S17). When the controller 51 receives the response transmitted by the server 12 (S17), the controller 51 obtains the modified check table contained in the received response. The controller 51 stores check information indicating each check box in the obtained modified check table is checked or not in the EEPROM 57 of the memory 53 (S18). In response to the determined mode being the second mode, the controller 51 does not perform the processes from S11 to S18.

The controller 51 receives a request including a command to request the check table from the management device 11 through the local network 13 and the communication I/F 47 (S21). In response to receipt of the command, the controller 51 generates check table image data (S22) and transmits the generated check table image data to the management device 11 through the communication I/F 47 and the local network 13 (S23). When the program implemented in the management device 11 receives the check table image data, the program displays the check table indicated by the check table image data on the display of the management device 11, and receives input from the administrator (S24). The program implemented in the management device 11 changes the presence or absence of checks in the check table according to the instructions received from the administrator, and generates a modified check table. The program implemented in the management device 11 transmits the generated modified check table to the printer 10 through the local network 13 (S25). The controller 51 receives the modified check table transmitted by the management device 11 through the communication I/F 47 (S25), and stores the check information indicating each check box in the received modified check table is checked or not in the EEPROM 57 of the memory 53 (S26). It is noted that the above-described process of the controller 51 to receive the instructions of the service provider or the administrator indicating the status information type to be transmitted by the printer 10 is one example, and the controller 51 may receive the instructions of the service provider or the administrator according to other methods.

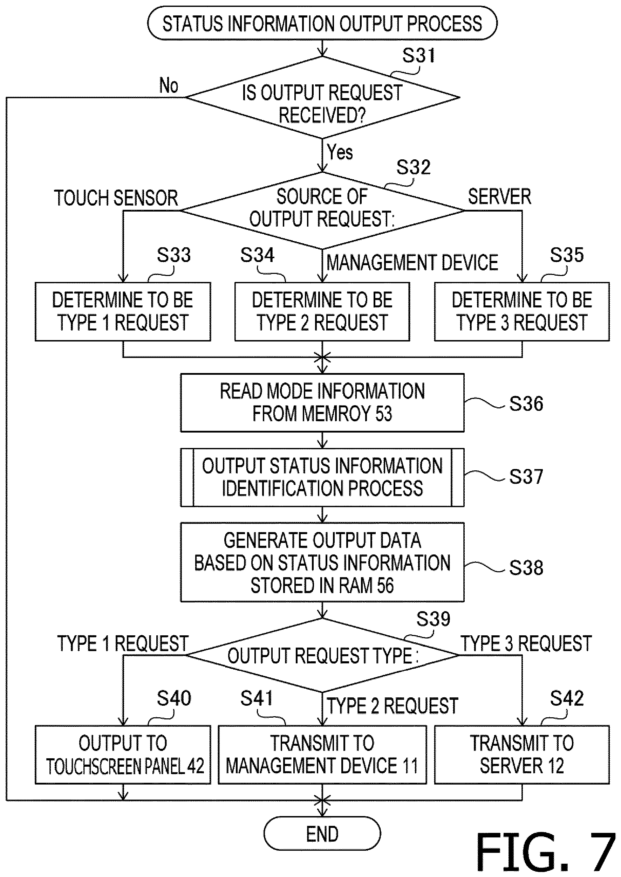

Next, a status information output process that the controller 51 transmits the status information stored in the EEPROM 57 of the memory 53 to the server 12, the management device 11, and the display panel 43 of the touchscreen panel 42 will be described with reference to Figs. 6 and 7. The controller 51 determines whether an output request for outputting the status information has been received. The output request is transmitted from the server 12, the management device 11, or the touch sensor 44 of the touchscreen panel 42. To describe in detail, the program implemented in the server 12 transmits a response including the output request through the Internet 14 and the local network 13 in the same manner as in S12. The controller 51 receives the response including the output request through the communication I/F 47 (S31: YES). Further, the program implemented in the management device 11 transmits the output request to the printer 10 through the local network 13. The controller 51 receives the output request transmitted by the management device 11 through the local network 13 and the communication I/F 47 (S31: YES). The user touches the touch sensor 44 of the touchscreen panel 42 to input the output request to the printer 10. The controller 51 receives the output request input from the touch sensor 44 (S31: YES). When the controller 51 does not obtain the output request (S31: NO), the controller 51 terminates the status information output process. It is noted that the controller 51 executes the status information output process periodically.

The controller 51 determines a source of the output request is the server 12, the management device 11, or the touch sensor 44 (S32). For example, the controller 51 determines that the output request was acquired from the server 12 based on that an IP address of the server 12 is included in the HTTP response containing the output request (S32: SERVER). Alternatively, based on that an IP address of the management device 11 is included in the received output request, the controller 51 determines that the output request was obtained from the management device 11 (S32: MANAGEMENT DEVICE).

When the controller 51 determines that the output request was obtained from the touch sensor 44 (S32: TOUCH SENSOR), the controller 51 determines the output request type to be the type 1 request (S33). When the controller 51 determines that the output request was obtained from the management device 11 (S32: MANAGEMENT DEVICE), the controller 51 determines the output request type to be the type 2 request (S34). When the controller 51 determines that the output request was obtained from the server 12 (S32: SERVER), the controller 51 determines the output request type to be the type 3 request (S35). After determining the output request type (S33 to S35), the controller 51 reads the mode information stored in the EEPROM 57 of the memory 53 (S36). The controller 51 executes an output status information identification process (S37) to identify the status information type to be output based on the determined output request type and the read mode information. It is noted that information indicating whether the output request is input from the touch sensor, from the management device 11, or from the server 12 is an example of request type information.

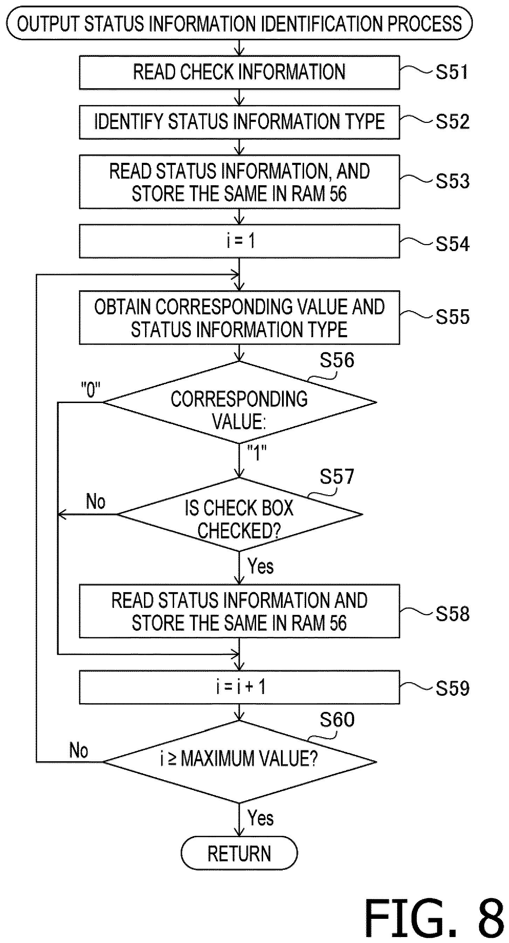

The output status information identification process is described with reference to Fig. 8. First, the controller 51 reads, from the memory 53, the check information which was stored in the memory 53 in S18 or S26 (S51). The controller 51 identifies the status information type to be output based on the read check information and the output request type determined in S33 to S35 (S52). For example, when the determined output request type is the type 1 request (Notification Options 1) and the check box corresponding to the sub-item "Total" of the item "Sheet count per paper type" is checked as shown in the check table (Fig. 5), the controller 51 identifies "total number of sheets printed by paper type" as the status information type to be output. The controller 51 reads the status information indicated by the identified status information type from the EEPROM 57 of the memory 53, and stores the read status information in the RAM 56 as the status information to be output (S53).

Next, the controller 51 sets the value "i" stored in the particular storage area of the EEPROM 57 of the memory 53 to the initial value "1" (S54). In the correspondence table, the controller 51 identifies the record in which the item "number" is "1" which is the value "i." In the identified record, the controller 51 obtains a corresponding value ("0" or " 1") corresponding to the output request type determined in S33 to S35 and the mode information read from the EEPROM 57 of the memory 53 in S36 (S55). For example, when the determined output request type is the type 1 request and the mode information read from the EEPROM 57 of the memory 53 indicates the first mode, the controller 51 obtains the corresponding value "1." In addition, the controller 51 obtains the status information type "printer information" registered in the identified record. The controller 51 determines whether the obtained corresponding value is "1" . or "0" (S56). When the controller 51 determines that the obtained corresponding value is "1" (S56: "1"), the controller 51 determines whether the check information contains information indicating that the check box corresponding to the status information type "printer information" is checked (S57). When the controller 51 determines that the check box corresponding to the status information type "printer information" is checked (S57: YES), the controller 51 executes the process S58. Concretely, the controller 51 reads, as the status information to be output, the printer information stored in the memory 53 as the status information type "printer information" from the memory 53, and stores the read status information in the RAM 56 (S58). When the controller 51 determines that the obtained corresponding value is "0" in S56 (S56: "0"), the controller 51 skips the processes S57 and S58. When the controller 51 determines that the check box corresponding to the status information type "printer information" is not checked (S57: NO), the controller 51 skips the process S58.

Next, the controller 51 increments the value "i" (S59) and determines whether the incremented value "i" is greater than or equal to a maximum value stored in the memory 53 (S60). The maximum value is stored in the memory 53 as the number of records registered in the correspondence table. That is, in S60, it is determined whether or not all the records registered in the correspondence table have been determined to be status information which is to be output. When the controller 51 determines that the value "i" is less than the maximum value (S60: NO), the controller 51 executes the process from S55 onward again. When the controller 51 determines that the value "i" is greater than or equal to the maximum value (S60: YES), the controller 51 terminates the output status information identification process and executes the process S38 of the status information output process shown in Fig. 7.

The controller 51 generates output data including the status information stored in the RAM 56 in S58 (S38). Then, the controller 51 determines an output destination of the generated output data based on the output request type (S39), and transmits the generated output data to the determined output destination. Concretely, when the controller 51 determines that the output request type is the type 1 request (S39: "type 1 request"), the controller 51 outputs the generated output data to the display panel 43 of the touchscreen panel 42 (S40). That is, the controller 51 causes the display panel 43 to display the status information stored in the RAM 56 in S53 as the status information to be output. When the controller 51 determines that the output request type is the type 2 request (S39: "type 2 request"), the controller 51 transmits the generated output data to the management device 11 through the local network 13 (S41). The program implemented in the management device 11 receives the output data and displays the status information contained in the received output data on the display of the management device 11. When the controller 51 determines that the output request type is the type 3 request (S39: "type 3 request"), the controller 51 generates a request containing the generated output data. The controller 51 transmits the generated request to the server 12 through the communication I/F 47 (S42). The program implemented in the server 12 receives the request containing the output data and displays the status information contained in the received output data on the display of the server 12. The controller 51 terminates the status information output process in response to transmission of the output data to the touchscreen panel 42, the management device 11, or the server 12.

### Effect of the Embodiment

The controller 51 identifies the status information type based on the determined output request type, the mode indicated by the mode information, and the correspondence table stored in the memory 53 among the plurality of status information stored in the EEPROM 57. Then, the controller 51 reads the status information indicated by the identified status information type from the memory 53 and outputs the read status information. Thus, the printer 10 can change the status information type to be output according to whether the type of the cartridge 15 mounted in the mounting case 32 is in the contracted usage mode or the normal usage mode, and according to whether the user requesting the status information is a user, an administrator or a service provider. For example, when the type of the cartridge 15 mounted in the mounting case 32 is the contracted usage mode and the output request type is the type 1 request (user), the status information such as the CTG lifetime information, the pad lifetime information, and the CTG coverage information are not necessary for the user, and if such information is displayed on the touchscreen panel 42 together with the necessary information for the user, it will be difficult for the user to recognize the necessary information. The printer identifies the status information necessary for a user who made the output request in the correspondence table, and outputs the identified status information. Therefore, the printer 10 helps the user who made the output request recognize the status information required by the user who made the output request.

Further, the controller 51 transmits the check table image data to the management device 11 or the server 12, receives the check information indicating the instructions of the administrator or the service provider, and obtains the status information type to be output based on the received check information (S55). Thus, the printer 10 can also allow the administrator or service provider to select the status information type to be output.

### Modifications

In the above-described embodiment, an example is described in which the controller 51 determines that the output request type is the type 2 request based on that the controller 51 has received the output request transmitted from the management device 11. However, the controller 51 may determine that the output request type is the type 2 request based on that the output request received through the communication I/F 47 includes administrator information such as an account indicating the administrator. In that case, the controller 51 determines that the output request type is the type 1 request based on that the administrator information is not included in the output request received through the communication I/F 47. When the controller 51 receives, for example, an output request transmitted from a management device 11 other than the management device 11 used by the administrator, the controller 51 determines whether the received output request contains the administrator information. The administrator information is an example of the request type information.

In the above-described embodiment, an example is described in which the controller 51 determines that the output request type is the type 1 request based on that the output request is received through the touch sensor 44. However, the controller 51 may determine that the output request type is the type 2 request based on that the above-described administrator information is included in the output request received through the touch sensor 44. In that case, the controller 51 determines that the output request type is the type 1 request based on that the above-described administrator information is not included in the output request received through the touch sensor 44. The administrator information is an example of the request type information.

In the above-described embodiment, an example is described in which the controller 51 determines that the output request type is the type 3 request based on that the controller 51 has received a response that includes the output request. However, the controller 51 may determine that the output request type is the type 3 request based on that the received output request includes service provider information such as an account indicating the service provider.

In the above-described embodiment, an example is described in which status information indicated by a record registered as "1" in the correspondence table but without a check box checked in the check table is not transmitted to the management device 11 or the server 12. However, the status information indicated by the record registered with "1" in the correspondence table may be transmitted to the management device 11 or the server 12 regardless of whether the check box in the check table is checked or not.

In the above-described embodiment, an example is described in which the controller 51 outputs the output data to the display panel 43 of the touchscreen panel 42 when it is determined that the output request type is the type 1 request. However, when the controller 51 determines that the output request type is the type 1 request, the controller 51 may drive the recording engine 40 to record the status information included in the output data on the sheet. Alternatively, the controller 51 may drive the recording engine 40 to record the status information on the sheet in response to the obtained output request including an instruction to record the status information on the sheet.

In the above-described embodiment, an example is described in which the controller 51 transmits a request including the output data to the server 12 in S42. However, the controller 51 may, instead of or together with the process in S42, send an e-mail containing the output data to an e-mail address that the service provider has.

### DESCRIPTION OF NUMERALS

- 10: Printer
- 11: Management device
- 12: Server (Information processing device)
- 15: Cartridges
- 17: IC memory (Cartridge memory)
- 32: Mounting case (Mounting part)
- 34: Head
- 44: Touch sensor (User interface)
- 47: Communication interface
- 51: Controller
- 53: Memory

## Claims

1. An image recording device (10), comprising:
a mounting part (32) to which a cartridge is mounted;
a printing head (34) configured to perform printing on a sheet;
a cartridge interface (49);
an information interface (44, 45, 47);
a memory (53); and
a controller (51),
wherein the memory is configured to store correspondence information associating a plurality of status information types, output determination information and request type information with each other,
wherein the status information is information related to at least one of information on the cartridge mounted to the mounting part and information corresponding to operation of the printing head, the status information being information to be stored in the memory by the controller,
wherein the output determination information is information indicating a usage mode of a cartridge and corresponding to usage type information obtained from a cartridge memory through the cartridge interface, the cartridge memory being provided to the cartridge mounted to the mounting part,
wherein the request type information is information which indicates a source of an output request and is used to determine a type of a person requesting the status information, and
wherein the controller is configured to perform:
receiving an output request that requests output of the status information;
determining a type of the request type information based on the received output request; and
identifying the status information of which type is associated with the determined request type information and the output determination information corresponding to the obtained usage type information, the status information being identified based on the correspondence information from among a plurality of the status information types stored in the memory.

2. The image recording device according to claim 1, further comprising a display panel,
wherein the information interface includes a user interface (44, 45) and a communication interface (47), and
wherein the controller (51) is configured to perform:
in response to receipt of the output request through the user interface, determining the request type information is a type 1 request;
in response to receipt of the output request from a management device connected to a local network to which the communication interface is connected, determining that the request type information is a type 2 request;
in response to receipt of the output request from the information processing device through the communication interface and the Internet, determining that the request type information is a type 3 request;
in response to determination of the type 1 request, outputting the identified status information on one of the display panel and the printing head, the display panel being configured to display the identified status information when receiving the identified status information, the printing head being configured to print the identified status information when receiving the identified status information;
in response to determination of the type 2 request, outputting the identified status information to one of the printing head and the management device; and
in response to determination of the type 3 request, outputting the identified status information to the information processing device through the communication device.

3. The image recording device according to claim 2,
wherein the controller (51) is configured to perform:
receiving, from among the identified status information, one of selections of outputting and not outputting; and
outputting only the status information for which the selection of outputting is received.

4. The image recording device according to any of claims 1-3,
wherein the status information including cartridge lifetime information stored in the memory by the controller, the cartridge lifetime information being information indicating lifetime of the cartridge mounted to the mounting part, and
wherein whether to output or not the cartridge lifetime information switches depending on the type of the request type information and the type of the output determination information.

5. The image recording device according to any of claims 1-4, further comprising:
a pump (64) configured to discharge ink from the printing head which is configured to eject the ink contained in the cartridge mounted to the mounting part; and
a maintenance device (60) provided with a pad (66) configured to hold the ink discharged from the printing head,
wherein the status information includes pad lifetime information stored in the memory by the controller, the lifetime information being information corresponding to an amount of the ink held by the pad, and
wherein whether or not the pad lifetime information is to be output switches depending on the type of the request type information and the type of the output determination information.

6. The image recording device according to any of claims 1-5,
wherein the status information includes coverage information stored in the memory by the controller (51), the coverage information being is information indicating occupancy rate of a consumable stored by the cartridge mounted to the mounting part, and
wherein whether or not the coverage information is to be output switches depending on the type of the request type information and the type of the output determination information.

7. The image recording device according to any of claims 1-6,
wherein the status information includes page count information stored in the memory by the controller (51), the page count information being information corresponding to the number of sheets on which the printing head performed recording, and
wherein whether or not the page count information is to be output switches depending on the type of the request type information and the type of the output determination information.

8. The image recording device according to any of claims 1-7,
wherein the status information incudes cartridge identification information obtained, by the controller (51), from the cartridge memory through the cartridge interface, the cartridge identification information being information identifying the cartridge mounted in the mounting part, and
wherein whether or not the cartridge identification information is to be output switches depending on the type of the request type information and the type of the output determination information.

9. The image recording device according to any of claims 4-8,
wherein the status information contains at least one of:
state information which is information indicating a state of a recording part including the printing head;
main body identification information which is stored in the memory in advance; and
replacement count information which is information indicating the number of times the cartridge has been replaced, and stored in the memory (53) by the controller (51).

## Patentansprüche

1. Bildaufzeichnungsvorrichtung (10), umfassend:
ein Montageteil (32), an dem eine Patrone montiert ist;
einen Druckkopf (34), der dazu konfiguriert ist, das Drucken auf einem Blatt durchzuführen;
eine Patronenschnittstelle (49);
eine Informationsschnittstelle (44, 45, 47);
einen Speicher (53); und
eine Steuervorrichtung (51),
wobei der Speicher dazu konfiguriert ist, Entsprechungsinformationen zu speichern, die eine Mehrzahl von Statusinformationstypen, Ausgabebestimmungsinformationen und Anfragetypinformationen einander zuordnen,
wobei die Statusinformationen Informationen sind, die sich auf wenigstens eine von Informationen über die Patrone, die an dem Montageteil montiert ist, und Informationen beziehen, die dem Betrieb des Druckkopfes entsprechen, wobei die Statusinformationen Informationen sind, die von der Steuervorrichtung in dem Speicher zu speichern sind,
wobei die Ausgabebestimmungsinformationen Informationen sind, die einen Benutzungsmodus einer Patrone anzeigen und den Gebrauchstypinformationen entsprechen, die von einem Patronenspeicher über die Patronenschnittstelle erhalten werden, wobei der Patronenspeicher der an dem Montageteil montierten Patrone bereitgestellt wird,
wobei die Anfragetypinformationen Informationen sind, die eine Quelle einer Ausgabeanfrage anzeigen und verwendet werden, um einen Typ einer Person zu bestimmen, die die Statusinformationen anfragt, und
wobei die Steuervorrichtung zum Durchführen konfiguriert ist von:
Empfangen einer Ausgabeanfrage, die die Ausgabe der Statusinformationen anfragt;
Bestimmen eines Typs der der Anfragetypinformationen auf Grundlage der empfangenen Ausgabeanfrage; und
Identifizieren der Statusinformationen, welcher Typ den Anfragetypinformationen zugeordnet ist, und der Ausgabebestimmungsinformationen, die den erhaltenen Verwendungstypinformationen entsprechen, wobei die Statusinformationen auf Grundlage der Entsprechungsinformationen aus einer Mehrzahl der in dem Speicher gespeicherten Statusinformationstypen identifiziert werden.

2. Bildaufzeichnungsvorrichtung nach Anspruch 1, ferner umfassend eine Anzeigetafel,
wobei die Informationsschnittstelle eine Benutzerschnittstelle (44, 45) und eine Kommunikationsschnittstelle (47) beinhaltet, und
wobei die Steuervorrichtung (51) zum Durchführen konfiguriert ist von:
als Reaktion auf das Empfangen der Ausgabeanfrage durch die Benutzerschnittstelle, Bestimmen, dass die Anfragetypinformationen eine Typ-1-Anfrage sind;
als Reaktion auf das Empfangen der Ausgabeanfrage von einer Verwaltungsvorrichtung, die mit einem lokalen Netzwerk verbunden ist, mit der die Kommunikationsschnittstelle verbunden ist, Bestimmen, dass die Anfragetypinformationen eine Typ-2-Anfrage sind;
als Reaktion auf das Empfangen der Ausgabeanfrage von der Informationsverarbeitungsvorrichtung über die Kommunikationsschnittstelle und das Internet, Bestimmen, dass die Anfragetypinformationen eine Typ-3-Anfrage sind;
als Reaktion auf das Bestimmen der Typ-1-Anfrage, Ausgeben der identifizierten Statusinformationen auf eines des Anzeigefelds oder des Druckkopfes, wobei das Anzeigefeld dazu konfiguriert ist, die identifizierten Statusinformationen anzuzeigen, wenn die identifizierten Statusinformationen empfangen werden, wobei der Druckkopf dazu konfiguriert ist, die identifizierten Statusinformationen zu drucken, wenn die identifizierten Statusinformationen empfangen werden;
als Reaktion auf das Bestimmen der Typ-2-Anfrage, Ausgeben der identifizierten Statusinformationen an einen/eine des Druckkopfes oder der Verwaltungsvorrichtung; und
als Reaktion auf das Bestimmen der Typ-3-Anfrage, Ausgeben der identifizierten Statusinformationen an die Informationsverarbeitungsvorrichtung über die Kommunikationsvorrichtung.

3. Bildaufzeichnungsvorrichtung nach Anspruch 2,
wobei die Steuervorrichtung (51) zum Durchführen konfiguriert ist von:
Empfangen der identifizierten Statusinformationen als eine der Auswahlen von Ausgeben und Nicht-Ausgeben; und
Ausgeben nur der Statusinformationen, für die die Auswahl der Ausgabe empfangen wird.

4. Bildaufzeichnungsvorrichtung nach einem der Ansprüche 1-3,
wobei die Statusinformationen Patronenlebensdauerinformationen beinhalten, die in dem Speicher durch die Steuervorrichtung gespeichert sind, wobei die Patronenlebensdauerinformationen Informationen sind, die die Lebensdauer der Patrone anzeigen, die an dem Montageteil montiert ist, und
wobei, ob die Patronenlebenszeitinformationen ausgegeben werden oder nicht, abhängig von dem Typ der Anfragetypinformationen und dem Typ der Ausgabebestimmungsinformationen gewechselt wird.

5. Bildaufzeichnungsvorrichtung nach einem der Ansprüche 1-4, ferner umfassend:
eine Pumpe (64), die dazu konfiguriert ist, Tinte aus dem Druckkopf abzugeben, der dazu konfiguriert ist, die Tinte auszustoßen, die in der Patrone enthalten ist, die an dem Montageteil montiert ist; und
eine Wartungsvorrichtung (60), die mit einem Kissen (66) versehen ist, das dazu konfiguriert ist, die aus dem Druckkopf abgegebene Tinte zu halten,
wobei die Statusinformationen Kissenlebensdauerinformationen beinhalten, die in dem Speicher durch die Steuervorrichtung gespeichert sind, wobei die Lebensdauerinformationen Informationen sind, die einer Menge der Tinte entsprechen, die von dem Kissen gehalten wird, und
wobei, ob die Kissenlebenszeitinformationen ausgegeben werden oder nicht, abhängig von dem Typ der Anfragetypinformationen und dem Typ der Ausgabebestimmungsinformationen gewechselt wird.

6. Bildaufzeichnungsvorrichtung nach einem der Ansprüche 1-5,
wobei die Statusinformationen Abdeckungsinformationen beinhalten, die in dem Speicher durch die Steuervorrichtung (51) gespeichert sind, wobei die Abdeckungsinformationen Informationen sind, die die Belegungsrate eines Verbrauchsmaterials anzeigen, das in der an dem Montageteil montierten Patrone gespeichert ist, und
wobei, ob die Abdeckungsinformationen ausgegeben werden oder nicht, abhängig von dem Typ der Anfragetypinformationen und dem Typ der Ausgabebestimmungsinformationen gewechselt wird.

7. Bildaufzeichnungsvorrichtung nach einem der Ansprüche 1-6,
wobei die Statusinformationen Seitenzahlinformationen beinhalten, die in dem Speicher von der Steuervorrichtung (51) gespeichert sind, wobei die Seitenzahlinformationen Informationen sind, die der Anzahl der Blätter entspricht, auf denen der Druckkopf eine Aufzeichnung durchgeführt hat, und
wobei, ob die Seitenzahlinformationen ausgegeben werden oder nicht, abhängig von dem Typ der Anfragetypinformationen und dem Typ der Ausgabebestimmungsinformationen gewechselt wird.

8. Bildaufzeichnungsvorrichtung nach einem der Ansprüche 1-7,
wobei die Statusinformationen Patronenidentifikationsinformationen beinhalten, die durch die Steuervorrichtung (51) aus dem Patronenspeicher über die Patronenschnittstelle erhalten werden, wobei die Patronenidentifikationsinformationen Informationen sind, die die in dem Montageteil montierte Patrone identifizieren, und
wobei, ob die Patronenidentifikationsinformationen ausgegeben werden oder nicht, abhängig von dem Typ der Anfragetypinformationen und dem Typ der Ausgabebestimmungsinformationen gewechselt wird.

9. Bildaufzeichnungsvorrichtung nach einem der Ansprüche 4-8,
wobei die Statusinformationen wenigstens eines enthält von:
Zustandsinformationen, die Informationen sind, die einen Zustand eines Aufzeichnungsteils, einschließlich des Druckkopfes, anzeigen;
Hauptkörperidentifikationsinformationen, die in dem Speicher im Voraus gespeichert wurden; und
Ersatzzahlinformationen, die Informationen sind, die die Anzahl der Male anzeigen, die die Patrone ersetzt worden ist, und in dem Speicher (53) durch die Steuervorrichtung (51) gespeichert sind.

## Revendications

1. Dispositif d'enregistrement d'images (10), comprenant :
une partie de montage (32) sur laquelle est montée une cartouche ;
une tête d'impression (34) configurée pour réaliser une impression sur une feuille ;
une interface de cartouche (49) ;
une interface d'informations (44, 45, 47) ;
une mémoire (53) ; et
un dispositif de commande (51),
dans lequel la mémoire est configurée pour stocker des informations de correspondance associant une pluralité de types d'informations de statut, d'informations de détermination de sortie et d'informations de type de demande les unes avec autres,
dans lequel les informations de statut sont des informations se rapportant à au moins les unes parmi des informations sur la cartouche montée sur la partie de montage et des informations correspondant au fonctionnement de la tête d'impression, les informations de statut étant des informations à stocker dans la mémoire par le dispositif de commande,
dans lequel les informations de détermination de sortie sont des informations indiquant un mode d'utilisation d'une cartouche et correspondant à des informations de type d'utilisation obtenues à partir d'une mémoire de cartouche par le biais de l'interface de cartouche, la mémoire de cartouche étant prévue sur la cartouche montée sur la partie de montage,
dans lequel les informations de type de demande sont des informations qui indiquent une source d'une demande de sortie et sont utilisées pour déterminer un type de personne demandant les informations de statut, et
dans lequel le dispositif de commande est configuré pour réaliser :
la réception d'une demande de sortie qui demande une sortie des information de statut ;
la détermination d'un type des informations de type de demande sur la base de la demande de sortie reçue ; et
l'identification des informations de statut dont un type est associé aux informations de type de demande déterminées et aux informations de détermination de sortie correspondant aux informations de type d'utilisation obtenues, les informations de statut étant identifiées sur la base des informations de correspondance parmi une pluralité de types d'informations de statut stockés dans la mémoire.

2. Dispositif d'enregistrement d'images selon la revendication 1, comprenant en outre un panneau d'affichage,
dans lequel l'interface d'informations inclut une interface utilisateur (44, 45) et une interface de communication (47), et
dans lequel le dispositif de commande (51) est configuré pour réaliser :
en réponse à la réception de la demande de sortie par le biais de l'interface utilisateur, la détermination du fait que les informations de type de demande sont une demande de type 1 ;
en réponse à la réception de la demande de sortie à partir d'un dispositif de gestion connecté à un réseau local auquel l'interface de communication est connectée, la détermination du fait que les informations de type de demande sont une demande de type 2 ;
en réponse à la réception de la demande de sortie à partir du dispositif de traitement d'informations par le biais de l'interface de communication et de l'Internet, la détermination du fait que les informations de type de demande sont une demande de type 3 ;
en réponse à une détermination de la demande de type 1, la fourniture en sortie des informations de statut identifiées sur l'un parmi le panneau d'affichage et la tête d'impression, le panneau d'affichage étant configuré pour afficher les informations de statut identifiées lors de la réception des informations de statut identifiées, la tête d'impression étant configurée pour imprimer les informations de statut identifiées lors de la réception des informations de statut identifiées ;
en réponse à la détermination de la demande de type 2, la fourniture en sortie des informations de statut identifiées à l'un parmi la tête d'impression et le dispositif de gestion ; et
en réponse à la détermination de la demande de type 3, la fourniture en sortie des informations de statut identifiées au dispositif de traitement d'informations par le biais du dispositif de communication.

3. Dispositif d'enregistrement d'images selon revendication 2,
dans lequel le dispositif de commande (51) est configuré pour réaliser :
la réception, à partir des informations de statut identifiées, les unes parmi des sélections de fourniture en sortie et de non-fourniture en sortie ; et
la fourniture en sortie uniquement des informations de statut pour lesquelles la sélection de sortie fourniture en sortie est reçue.

4. Dispositif d'enregistrement d'images selon l'une quelconque des revendications 1 à 3,
dans lequel les informations de statut incluent des informations de durée de vie de cartouche stockées dans la mémoire par le dispositif de commande, les informations de durée de vie de cartouche étant des informations indiquant une durée de vie de cartouche montée sur la partie de montage, et
dans lequel le fait de fournir en sortie ou non des informations de durée de vie de cartouche varie en fonction du type des informations de type de demande et du type des informations de détermination de sortie.

5. Dispositif d'enregistrement d'images selon l'une quelconque des revendications 1 à 4, comprenant en outre :
une pompe (64) configurée pour décharger de l'encre à partir de la tête d'impression qui est configurée pour éjecter l'encre contenue dans la cartouche montée sur la partie de montage ; et
un dispositif d'entretien (60) pourvu d'un tampon (66) configuré pour retenir l'encre déchargée à partir de la tête d'impression,
dans lequel les informations de statut incluent des informations de durée de vie de tampon stockées dans la mémoire par le dispositif de commande, les informations de durée de vie de tampon étant des informations correspondant à une quantité de l'encre retenue par le tampon, et
dans lequel le fait que les informations de durée de vie de tampon doivent être fournies en sortie ou non varie en fonction du type des informations de type de demande et du type des informations de détermination de sortie.

6. Dispositif d'enregistrement d'images selon l'une quelconque des revendications 1 à 5,
dans lequel les informations de statut incluent des informations de couverture stockées dans la mémoire par le dispositif de commande (51), les informations de couverture étant des informations indiquant le taux d'occupation d'un consommable stocké par la cartouche montée sur la partie de montage, et
dans lequel le fait que les informations de couverture doivent être fournies en sortie ou non varie en fonction du type des informations de type de demande et du type des informations de détermination de sortie.

7. Dispositif d'enregistrement d'images selon l'une quelconque des revendications 1 à 6,
dans lequel les informations de statut incluent des informations de comptage de pages stockées dans la mémoire par le dispositif de commande (51), les informations de comptage de pages étant des informations correspondant au nombre de feuilles sur lesquelles la tête d'impression a réalisé l'enregistrement, et
dans lequel le fait que les informations de comptage de pages doivent être fournies en sortie ou non varie en fonction du type des informations de type de demande et du type des informations de détermination de sortie.

8. Dispositif d'enregistrement d'images selon l'une quelconque des revendications 1 à 7,
dans lequel les informations de statut incluent des informations d'identification de cartouche obtenues, par le dispositif de commande (51), à partir de la mémoire de cartouche par le biais de l'interface de cartouche, les informations d'identification de cartouche étant des informations identifiant la cartouche montée dans la partie de montage, et
dans lequel le fait que les informations d'identification de cartouche doivent être fournies en sortie ou non varie en fonction du type des informations de type de demande et du type des informations de détermination de sortie.

9. Dispositif d'enregistrement d'images selon l'une quelconque des revendications 4 à 8,
dans lequel les informations de statut contiennent au moins les unes parmi :
des informations d'état qui sont des informations indiquant un état d'une partie d'enregistrement incluant la tête d'impression ;
des informations d'identification de corps principal qui sont stockées dans la mémoire à l'avance ; et
des informations de comptage de remplacements qui sont des informations indiquant le nombre de fois que la cartouche a été remplacée, et stockées dans la mémoire (53) par le dispositif de commande (51).
